# EUROPEAN PATENT SPECIFICATION

(11) **EP 1 248 749 B1**
(45) Date of publication and mention of the grant of the patent: **01.06.2005**
(21) Application number: 00918834.3
(22) Date of filing: 24.03.2000
(51) Int. Cl.: C03C 25/44, H01B 1/00, C04B 41/45, D01F 11/00

(54) **AN ELECTROCONDUCTIVE COMPOSITE MATERIAL AND A METHOD OF PREPARING AN ELECTROCCONDUCTIVE COMPOSITE MATERIAL**
ELEKTROLEITENDER VERBUNDWERKSTOFF UND VERFAHREN ZUR HERSTELLUNG EINES VERBUNDWERKSTOFFS
MATERIAU COMPOSITE ELECTROCONDUCTEUR ET PROCEDE DE PREPARATION D'UN MATERIAU COMPOSITE ELECTROCONDUCTEUR

(30) Priority: 28.12.1999 WO PCT/EP99/10431
(43) Date of publication of application: 16.10.2002
(73) Proprietor: Frohwitter, Bernhard, 81679 München (DE)
(72) Inventor: FILATOV, Vladimir Nikolaevich, Moscow, 125284 (RU)
(74) Representative: Tomlinson, Edward James
(86) International application number: PCT/EP2000/002626
(87) International publication number: WO 2001/047826

(56) References cited:
- EP-A- 0 390 383
- WO-A-98/15158
- DE-A- 4 443 471
- GB-A- 934 567
- GB-A- 1 134 133
- US-A- 5 891 518

## Description

The invention relates to an electroconductive braided composite material comprising a high temperature resistant substance covered by a layer of carbon and a method to produce said composite material.

It is known a variety of ways to coat a surface of non-metallic substances (e.g. glass, ceramics, quartz, etc.) with a layer of carbon or with a layer of a carbon compound, which contains carbon as a main or as an admixture element of the compound.

It is known a practice to deposit a carbon coating by thermally decomposing an organic material to form carbon as a solid decomposition product, where such decomposition is usually effected within a porous of a porous body after the body has been impregnated with a suitable organic material (US 2,556,616). This technique is often a basis technique for solid body carbon resistance.

Alternatively, the material decomposed may be a hydrocarbon gas (US 2,057, 431 or US 2,487,581) that, at least in part, constitutes the atmosphere surrounding a body. In this case a body serves as a substrate, and the carbon deposits within pores or on the surface depending upon the nature of the substrate body. Where a smooth surface substrate is employed, this procedure is the basis of carbon coated resistors. As a general rule, carbon deposited after thermal decomposition is in particulate form, has a relatively low adhesiveness and thus must be physically protected. Moreover, the use of a gaseous hydrocarbon atmosphere requires considerable care, and is frequently considered to be impractical as an industrial production method.

The US Patent 4,210,431 discloses a method for making vitreous carbon coating on highly refractory substances (e.g. glass or ceramics). In accordance with this method the formation of carbon coating occurs by contacting the substrate, while hot, with an organic material (like paraffin, waxes, olefins, aromatics, glycol, tars, and asphalt) in liquid form. As a main field of application the production of optical waveguide systems is named.

It is also known to grow C60 thin films on metal substrates, in particular on silver or gold-coated glass substrates. The C60 thin films have a high degree of textured crystallinity, using vacuum evaporation with a high deposition rate, maintained at substantially high temperature. A known method according to US 5,876,790 uses a vacuum evaporation system wherein a metal substrate is operated at a high temperature during deposition of C60 onto the substrate. The C60 thin films are used as active layers in electronic devices like transistors, photo-voltaic cells, solar cells, integrated circuits, sensors, light emission devices, devices for electro-photography, magnetic recording discs and superconductors.

It is an object of the invention to provide a new composite employing a layer of carbon or carbon compound as defined in claim 1.

It is still a further object of the invention to disclose a method for production of the new composite as defined in claim 7, which allows a substantial improvement of the technological and economic characteristics of the manufacturing process, as well as a substantial increase of the quality of the final product.

It is also an object of the invention to disclose a new high voltage cable as defined is claim 4.

When used in this document, the term carbon is used to designate both, carbon as well as compounds containing carbon as a main element.

In accordance with an embodiment of the present invention, electroconductive composite materials are used to form a multi-filament thread of two or more filaments, wherein said filaments, made of substances capable to withstand high temperatures, e.g. temperatures of 600 °C, preferably temperatures of 1000 °C, of the thread are covered by a thin layer of carbon. As an example of said high temperature resistive substances using for making said filaments such materials as quartz, basalt or asbestos can be named. Two or more of said threads may form a braid. Each layer of carbon has a mirror-like appearance and forms a tube-like envelope on each filament. The braid may form a helical system of carbon tubes. The carbon layers may have the structure of a tubular carbon-molecule-cage, such structures are also described as fullerenes.

The electroconductive composite material may be prepared by passing a substrate, made of the substances capable to withstand high temperatures through a heating, particular through an active zone of an oven at a suitable temperature of about 800 - 1200 °C and depositing carbon on said high temperature resistive substrate in the active zone of said oven. A carbon containing substance, like an organic compound of oil, peat extract or oil extract is loaded on the high temperature resistive substrate prior to heating. The high temperature resistive substrate may have the form of a braided lace. Suitable structures for the high temperature resistive substrate, which is preferably a quartz substrate, and electroconductive composite material are also those known from textile technology, i.e. any suitable number of strings twisted and/or braided together in any suitable fashion. The amount of carbon to be deposited may be varied by the velocity of passing said high temperature resistive substrate through the heating, particularly through the active zone and said loading of organic compound or by the temperature in said active zone or by the concentration of said organic compound, whereby properties like electroconductivity may be varied.

It is worth to mention that the existence of said active zone in the oven is an important feature of the present invention. The constructional features of the active zone determine substantially the thermodynamic and hydrodynamic conditions for a process of evaporation, particularly of decomposition of carbon from the organic compound as well as for a process of deposition of carbon on said high temperature resistive substrate.

A preferred application or use according to the present invention is applying the aforementioned electroconductive composite materials, for instance, the carbon-quartz composite as an electroconductive element of a voltage cable, most preferably as a core element in a resistance high-voltage cable. Such a high-voltage cable is useful for instance in an ignition system of an internal combustion engine. The high-voltage cable may withstand temperatures which are substantially higher than the conventional temperature threshold barrier of 100-200°C. While said higher temperature is an important quality criterion for such a high-voltage cable, the smoothness of the surface of the conducting layer is likewise increased. Contrary to conventional high-voltage cables, the carbon-quartz composite according to the invention has an ideally smooth, mirror-like surface of its conducting layer. In the absence of peaks or sharp points on the surface, no currents are produced which would act detrimentally on the cover of the cable.

Last but not least, the high-voltage cable according to the invention, more exactly the electroconductive element of such cable does not undergo a polymerisation or a sintering which detrimentally affects conductive properties of the cable.

Describing one aspect of the invention in more detail, the inventor of the present invention has succeeded in obtaining electroconductive composite materials, particular carbon-quartz composites in the form of a braid. The braid, which can be approximately 1 mm in diameter, is composed of a plurality of quartz or silica threads. The braid is covered, by a technological process to be described later, with a mirror-like layer of carbon. It should be noticed that the carbon - due to the employed technological method - although applied to the braid in its totality, is deposited onto each filament or fibre of the threads. Thus, the carbon structure represents a helical system of thin carbon tubes. This reduces substantially the emission of radio waves having frequencies of 30 - 1000 MHz.

It has been found that the carbon-layer structure may belong to the family of carbon-molecule-cages known as fullerenes. Such carbon-molecule clusters are capable of forming tubular "bucky-tubal" fibres. Such fibres are nearly perfect in their molecular structure and are more chemically stable than other presently known fibres, in particular they are not submitted to the process of polymerisation when conducting electrical current.

The research on fullerenes over the past five years has revealed enormous non-conventionalities in the mechanical, chemical, magnetic and electrical properties, including the fact of so-called high-temperature super-conductivity. The crystal lattice of fullerenes may be tubular-helical shaped, which has no precedent in organic compounds.

A possible method of preparing electroconductive composite material, for instance, the carbon-quartz composite is now described. A braided lace or cord of high temperature resistive filaments, in this example of quartz filaments is prepared in a conventional manner. The number of filaments and/or threads using for making said braided lace or cord as well as textile characteristics are determined by the conditions of technological process and/or by the requirements imposed to the final product. The lace then is passed through a bath of an organic compoundand thereafter through a tube which is placed in an oven to constitute an active zone of the oven. The organic compound may be an oil, oil extract, peat extract, for instance, tar of peat wax or a solution of said substances in appropriate solvent, for instance in xylene, oil xylene or toluene. The organic compound or the solution of the organic compound in the solvent is brought in contact with the high temperature resistive material, for instance with the quartz substrate, and carbon is decomposed therefrom at a suitable temperature of about 800 - 1200 °C. The carbon is deposited onto the surface of said high temperature resistive filaments, which can be quartz substrate thereby crystallising in the form of a layer.

The amount of carbon to be deposited can be varied by choosing the passing velocity of the quartz substrate or by choosing the concentration of the said compound or by varying the temperature in the heating, particular in the active zone of the oven. Under this method it is possible to vary the physical property of electroconductivity of the carbon-quartz composite within a wide range. The inventor has found that the carbon-quartz composite according to the instant invention is particularly useful for designing a cable.

There has been a long-lasting need for providing high-voltage cables in ignition systems of internal combustion engines. The high temperature resistance of such cables as well as a low level of r-f emission are the most important criteria of quality for such a cable.

The temperature threshold barrier of a cable depends mostly on the properties of the conducting layer. The carbon-quartz composite according to the invention withstands a temperature of up to 800 °C and above. Conventional conducting layers of a high-voltage cable are manufactured by the creation of a graphite on polyvinyl or glass threads. Each of the composites cannot withstand more than 200 °C. Contrary thereto, samples according to the invention using conventional polymers and the electroconductive composite according to the invention withstand considerably more than 200 °C. Using most recent polymers, a cable according to a preferred embodiment of the invention withstands 500 to 600 °C.

A second criterion of quality of a high-voltage cable is the surface smoothness of the conducting layer carried on the substrate. Conventional cables are prepared by application of a dispersion (a mixture containing graphite) to a carrier, followed by polymerisation of the mixture. The conducting mixture is imbibed by the carrier. This method produces peaks, or sharp points, on the surface of the conducting layer which in turn produces Foucault currents which act detrimentally on the cover layer of the cable. Contrary thereto, the carbon-quartz composite according to the invention has an ideally smooth, mirror-like surface of its conducting layer.

A third criterion of quality of a cable is the lifetime of its active workability. High-voltage cables of known construction undergo, when conducting current, a polymerisation which renders the structure "sintered" to such an extent that the property of electroconductivity is altered or even completely disappears. Conventional cables of such a type may be run for not more than one year. The carbon-quartz composite according to the invention does not undergo a polymerisation under the conditions of a high-voltage application.

A forth criterion of quality of a cable is the low emission level of r-f (30 - 1000 MHz) noise. Regarding the fact that modem means of transportation especially modem autos contain a lot of electronic systems or devices, which may be very sensitive to electromagnetic or radio frequency interference, it is very important to provide the suppression of said arts of interference. The high-voltage cable using the conductive composite material, for instance, the carbon-quartz composite according to this invention is able substantially to suppress radio frequency or/and electromagnetic interference.

Investigations have been made on a high-voltage cable according to the invention in combination with an ignition system of internal combustion engines. A substantial decrease of electromagnetic and radio frequency interference as well as a substantial increase of the temperature threshold temperature have been proved. Moreover, a decrease of at least 5% to 10% in fuel consumption is expected which improves environment-related factors in transport applications of internal combustion engines.

### Description of the figures

The invention can be better described by examples of Fig. 1 to 4, wherein
- Fig. 1 shows an enlarged picture of a braided lace constituting an electroconductive composite material according to the invention, for instance, a carbon-quartz composite;
- Fig. 2 shows a preferred embodiment of a high-voltage cable according to the invention using the braided lace of Fig. 1 as an electro-conductive element;
- Fig. 3 depicts a conceptual scheme of a method of manufacturing a carbon-quartz composite according to the invention ; and
- Fig. 4 shows a laboratory installation for preparing an electroconductive composite material, e.g. a carbon-quartz composite according to the invention.

The reference numbers in the drawings are referred to in the list of reference numbers.

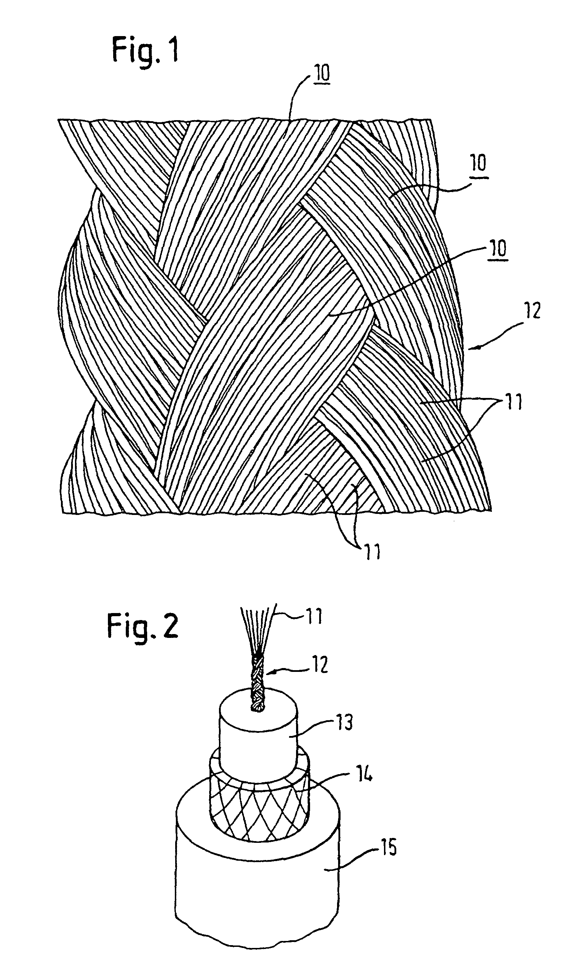

Fig. 1 shows an enlarged picture of a braided lace 12 constituting an electroconductive composite material, e.g. a carbon-/carbon-compound-quartz composite 1 consisting of a braid of threads 10 which are formed of bundles of filaments 11, for instance, of carbon- or carbon-compound-quartz composite filaments.

In accordance with the present invention, an electroconductive composite material, e.g. a carbon-quartz composite 12 is formed of multi-filament quartz threads 10, wherein the quartz filaments 11 of the threads 10 are covered by a thin layer of carbon or carbon compound. A plurality of the multi-filament quartz threads 10 form a braid 12 being approximately 1 mm in diameter. Each thin layer of carbon has a mirror-like appearance and forms a "tube" on each quartz filament 11. Thus, the effective part of the carbon-quartz braid 12 forms a helical system of thin carbon "tubes", wherein each carbon "tube" may have the structure of a tubular carbon-molecule-cage such as a fullerene.

Contrary to the prior art the carbon layers on the quartz filaments 11 have a considerably better adhesion than carbon coatings on conventionally used substrates (for instance glass or ceramics or metal-plated glass or polymer substrates). Suitable additives to the carbon compound may support this adhesive quality. Nevertheless, the new composite is manufactured in a more simple and less expensive manner than previous composites.

The preferred application or use according to the present invention is applying the aforementioned composite material, e.g. the carbon-quartz composite as an electroconductive element 12 of a voltage cable, in particular a high-voltage cable, as shown in Fig. 2. Such a high-voltage cable 11 to 15 is useful for instance in an ignition system of an internal combustion engine. The high-voltage cable 11-15 may withstand temperatures which are substantially higher than the conventional temperature threshold barrier of 100-200 °C. While said temperature threshold barrier is one of the most important quality criteria for a high-voltage cable, the smoothness of the surface of the conducting layer is likewise increased. Contrary to conventional high-voltage cables, the carbon-quartz composite according to the invention has an ideally smooth, mirror-like surface of its conducting layer. In the absence of peaks or sharp points on the surface, no currents are produced which would act detrimentally on the covering elements 13 to 15 of the cable. Moreover the high-voltage cable using the composite materials manufactured in accordance to present invention is capable substantially to suppress the electromagnetic and radio frequency interference.

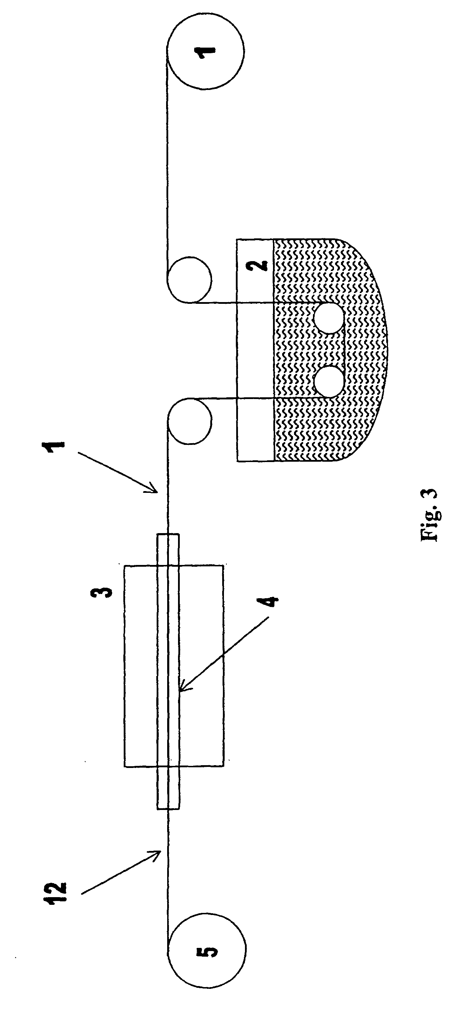

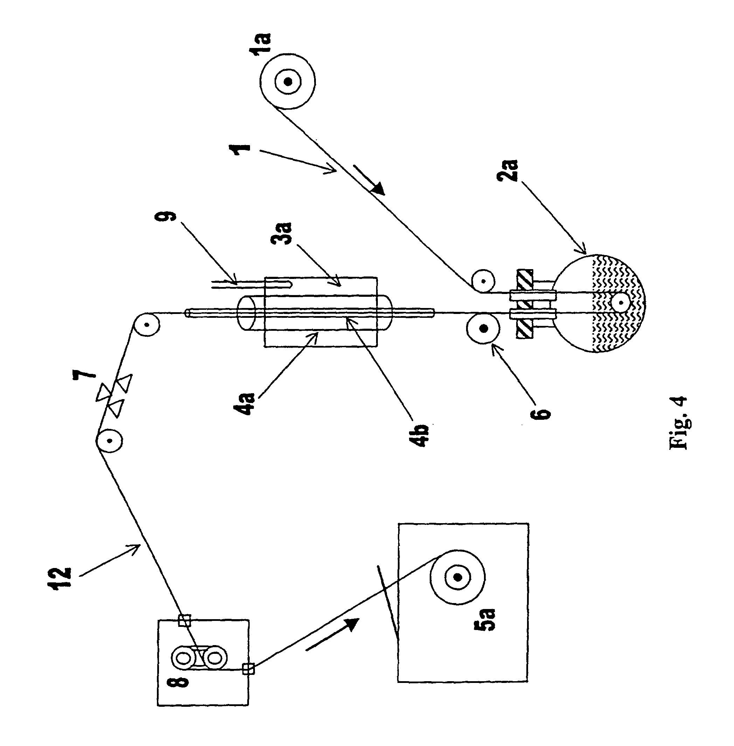

The conductive element 12 of the high-voltage cable according to Fig. 2 is prepared by a method to be described later in conjunction with Fig. 3 and 4.

For using it as a high-voltage cable, the conductive element 12 is covered by a protecting coating or seal 13 which is preferably made from materials like polymers capable of withstanding high temperatures and mechanical stresses like bending and stretching. Such polymers are known in the prior art. Referring to Fig. 2, the seal 13 is covered by an insulating layer such as a braid 14 formed of glass threads. The glass threads braid 14 serves as an insulating and reinforcing element of the cable, which is protected by a sheath 15 in a known manner.

Fig. 3 shows a conceptual scheme of the preferred method of manufacturing of a textile-like electroconductive composite material, for instance, the carbon-/carbon-compound-quartz composite. A textile substrate 1 of high temperature resistive materials (e.g. a braided quartz lace) is passing from an entering package 1 by means of a drawing mechanism through a bath 2 holding a solution of an organic compound that can be for example an oil, particular a crude oil, an oil extract or a peat extract, for instance, a tar of peat wax. Sintered or impregnated with said solution, the textile, e.g. the quartz substrate 1 is directed or passed into an active zone 4 of an oven 3 wherein it is subjected to the influence of an energy heating source, for instance subjected to a temperature of 800°C to 1200 °C. On its way into the active zone 4 of said oven 3, the solvent of said solution originating from bath 2 is entirely or partially evaporating. When the quartz substrate 1 passes through the active zone 4, a decomposition of carbon and/or additives from said organic compound occurs, followed by a deposition of carbon or carbon compound on said textile, e.g. on said quartz substrate 1 in such a way that a textile-like electroconductive composite material, for instance, a carbon/carbon compound-quartz composite 5 or conductive element 12 is formed. The active zone 4 of the oven 3, which will be closely described in conjunction with Fig. 4, is designed in a way to achieve a high quality coating of carbon on a quartz substrate (e.g. on a quartz lace 1). The carbon coating or layer may comprise additive materials which can also be decomposed and deposited from the solution of the organic compound in said bath 2.

Fig. 4 shows an example of a laboratory installation for preparing the composite material, e.g. for preparing the carbon-quartz composite 12 in accordance to the invention. A quartz substrate 1 from the entering reel 1a is passing through a retort 2a filled with an oil or with a xylene or toluene solution of an organic compound that is preferably an oil, oil extract or a peat extract, for instance, a tar of the peat wax. Thereafter the quartz substrate 1 is passing directly or after altering the direction of passing, which can be achieved on the intermediate reel 6, through a preferably vertically or inclined positioned metal 4b tube situated in a quartz tube 4a, where both tubes are placed in an electric oven 3a. Said metal tube 4b and quartz tube 4aconstitute the active zone 4 of the oven where the processes of decomposing the carbon from said organic compound, its subsequent deposition on said quartz substrate 1 and the formation of said carbon-quartz composite 12 takes place. A thermocouple 9 serves to control the temperature inside the oven 3a or inside the active zone constituted by the metal and quartz tubes 4b and 4a of said oven 3a, respectively. Exiting said active zone, the carbon quartz composite 12 is subjected to measuring its electrical resistance by means of carbon gauge 7 installed before (or after) rollers 8, which may serve as a drawing or pulling mechanism. The carbon-quartz composite 12 can finally be wound on a product reel 5a.

It is worth also to mention that said active zone of the oven plays an important role in the realisation of the invention. The realisation of the construction of said active zone of the oven, particular the size and the proportion of said metal 4b and quartz 4a tubes, as well as their inclination determines substantially the thermodynamic and hydrodynamic characteristics of the processes, which take place in the active zone.

### List of reference numbers

- 1.: Quartz substrate (provided by a braiding machine)
- 1a.: Entering reel with quartz substrate 1
- 2.: Bath with a solution of an organic compound
- 2a.: Retort with a xylene solution of a peat extract
- 3.: Oven
- 3.a.: Electric oven (with a calido wire spiral as a heating element)
- 4.: Active zone of the oven 3
- 4.a.: Quartz tube as a part of the active zone 4
- 4.b: Metal tube as a part of the active zone 4
- 5.: Carbon-/carbon compound-quartz composite
- 5.a.: Product reel for composite
- 6.: Reel altering the passing direction
- 7.: Carbon gauge for measuring electrical resistance of composite 12
- 8.: Rollers
- 9.: Thermocouple
- 10.: Thread (bundle of filaments)
- 11.: Filament
- 12.: Conductive element (braided lace or cord having filaments 11 of threads 10 coated with a carbon or carbon compound layer)
- 13.: Protective coating (seal)
- 14.: Glass threads braid (insulator and/or reinforcement)
- 15.: Sheath

## Claims

1. An electroconductive composite material (1) comprising a high temperature resistive substrate (10) covered by a carbon layer or a layer of a compound containing carbon as a main element, wherein the composite material comprises a multi-filament braid (12) and wherein said carbon or carbon containing layer forms a tube-like envelope on each filament of the braid **characterized in that** said high temperature resistive substrate is quartz or basalt or asbestos.

2. The electroconductive composite material according to the claim 1 wherein said braid has a diameter between 0.1 and 10 mm, preferably between 0.7 and 3 mm, particularly between 1.2 and 1.5 mm.

3. The electroconductive composite material according to one of claims 1 or 2 wherein said braid consists of 5 to 25 threads, preferably of 12 to 16 threads each thread having a textile density of 100 to 150 tex, preferably of 130 to 135 tex.

4. A high-voltage cable (11-15) comprising the electroconductive composite material according to one of claims 1-3 as an electro-conductive core element.

5. The cable according to claim 4, wherein said cable is capable of substantially suppressing an electromagnetic and/or radio frequency interference.

6. The cable according to claim 5 wherein said cable is a high-voltage cable in an ignition system of an internal combustion engine.

7. A method of preparing an electroconductive composite material, comprising the steps of
loading an organic compound to the surface of a high temperature resistive substrate the substrate being a multi-filament braided substrate,
passing the loaded substrate through an oven,
thereby decomposing carbon and optionally additive material from said organic compound at temperatures of about 800 °C - 1200 °C to form a carbon layer or a layer of a compound containing carbon as a main element on said substrate, each filament of the braided substrate being coated with a tube-like carbon or said carbon containing compound layer.

8. The method according to claim 7, wherein the organic compound is a solution of an organic matter in a solvent.

9. The method according to claim 7, wherein the organic compound is oil, preferably a crude oil or an oil extract.

10. The method according to claim 7 or 8, wherein the organic compound or organic matter comprises a peat extract.

11. The method according to claim 10, wherein said peat extract is a tar of peat wax.

12. The method according to claim 10 or 11, wherein the peat extract is a solution in a solvent of xylene, oil xylene or toluene.

13. The method according to one of claims 10 to 12, wherein said peat extract is a solution of tar of peat wax in oil xylene.

14. The method according to claim 13, wherein a concentration of tar of peat wax in oil xylene is variable, preferably between 3 % w/w and 12 % w/w, particularly between 9.5 % w/w and 10.5 % w/w.

15. The method according to one of the claims 10 to 12, wherein said peat extract is a solution in toluene of a concentration which is variable and is preferably not less than 10 % w/w.

16. The method according to one of claims 7 to 15, wherein said decomposition or evaporation of carbon or carbon containing compound is conducted in an active zone of said oven constituted by a metal tube of a predetermined diameter placed coaxially in a quartz tube having a diameter greater than that of the metal tube.

17. The method according to claim 16, wherein said metal tube has a diameter of about 2 mm.

18. The method according to claims 16 or 17, wherein said active zone of said oven is vertically positioned or inclined.

19. Method according to one of claims 16 to 18, wherein a temperature inside said oven is maintained between 800°C and 1200 °C, preferably between 1000 °C and 1200 °C, more particularly between 1150 °C and 1170° C.

20. Method for making according to claim 7 a high-voltage cable for an internal combustion engine, particularly for making a cable for an ignition system of said internal combustion engine, the cord comprising
- an electro-conductive core element in the form of a cord (12),
- wherein said cord is braided from a predetermined number of threads (10),
- wherein each thread is twisted from a predetermined number of filaments(11),
- wherein each of said filaments is a carbon-quartz composite such that a quartz substrate is covered by a carbon or said carbon containing compound layer,
- wherein said method comprises the steps of:
- manufacturing a quartz cord by twisting said predetermined number of uncovered quartz filaments to threads and braiding said predetermined number of threads to said cord,
- providing a bath of an organic compound like oil, or like a tar of peat wax in a solvent of oil xylene or in a solvent of toluene,
- impregnating said quartz cord in said bath of said organic compound,
- passing said impregnated cord through an oven having an active zone constituted by a substantially vertical metal tube having a diameter of approximately 2 mm and located coaxially in a vertical or inclined quartz tube having a diameter greater than said metal tube diameter,
- thereby decomposing carbon or said carbon containing compound from said organic compound at temperatures of about 1100°C to 1200°C in said oven, and
- depositing said carbon or said carbon containing compound on said quartz substrate in a manner that each filament is covered by said carbon or carbon containing compound layer.

21. A method according to claim 7 of manufacturing a core element of a high-voltage cable, particularly of a high-voltage cable for automotive ignition systems, comprising the steps of
- impregnating a braided quartz cord, which is of about 1.25 mm in diameter, with an organic compound, which preferably is oil or is a solution of a tar of peat wax in oil xylene or in toluene, and
- thereafter subjecting the impregnated quartz braided cord to thermal treatment in an oven at temperatures between 1150°C and 1170°C in said oven,
wherein said thermal treatment is accomplished in an active zone of said oven,
wherein thermodynamic and hydrodynamic conditions are achieved necessary to decompose carbon or said carbon containing compound from said organic compound and to deposit said decomposed carbon or carbon containing compound onto each filament of said braided quartz cord by constituting said active zone as a metal tube having a diameter 0.75 mm greater than the diameter of said quartz braided cord.

## Patentansprüche

1. Elektrisch leitfähiger Verbundwerkstoff (1), umfassend ein hochtemperaturresistentes Substrat (10), das mit einer Kohlenstoffschicht oder einer Kohlenstoff als ein Hauptelement enthaltenden Schicht bedeckt ist, wobei der Verbundwerkstoff eine aus einer Vielzahl von Fasern bestehende Flechte (12) aufweist und wobei die Schicht aus Kohlenstoff oder Kohlenstoff enthaltendem Material eine schlauchähnliche Ummantelung auf jeder Faser der Flechte bildet, **dadurch gekennzeichnet, dass** das hochtemperaturresistente Substrat aus Quarz, Basalt oder Asbest besteht.

2. Elektrisch leitfähiger Verbundwerkstoff nach Anspruch 1, bei dem die Flechte einen Durchmesser von zwischen 0,1 und 10 mm und vorzugsweise zwischen 0,7 und 3 mm, insbesondere zwischen 1,2 und 1,5 mm hat.

3. Elektrisch leitfähiger Verbundwerkstoff nach einem der Ansprüche 1 oder 2, bei dem die Flechte aus 5 bis 25 Fäden, vorzugsweise 12 bis 16 Fäden besteht, wobei jeder Faden eine Textildichte von 100 bis 150 Tex, vorzugsweise 130 bis 135 Tex aufweist.

4. Hochspannungskabel (11-15), das den elektrisch leitfähigen Verbundwerkstoff nach einem der Ansprüche 1 bis 3 als ein elektrisch leitfähiges Kernelement umfasst.

5. Kabel nach Anspruch 4, wobei das Kabel dazu fähig ist, eine elektromagnetische und/oder eine Hochfrequenz-Interferenz im Wesentlichen zu unterdrücken.

6. Kabel nach Anspruch 5, wobei das Kabel ein Hochspannungskabel in einem Zündsystem eines Verbrennungsmotors ist.

7. Verfahren zur Herstellung eines elektrisch leitfähigen Verbundwerkstoffes, mit den folgenden Schritten:
- Laden einer organischen Verbindung auf die Oberfläche eines hochtemperaturresistenten Substrats, wobei das Substrat ein aus einer Vielzahl von Fasern geflochtenes Substrat ist,
- Laufen-Lassen des geladenen Substrats durch einen Ofen,
- um hierdurch bei Temperaturen von ungefähr 800°C - 1200°C den Kohlenstoff und optional zusätzliches Material aus der organischen Verbindung zu zersetzen, um eine Schicht aus Kohlenstoff oder aus einer Kohlenstoff als ein Hauptelement enthaltenden Verbindung auf dem Substrat zu bilden, wobei jede Faser des geflochtenen Substrats mit einer schlauchartigen Schicht aus dem Kohlenstoff oder der Kohlenstoff enthaltenden Verbindung beschichtet wird.

8. Verfahren nach Anspruch 7, bei dem die organische Verbindung eine Lösung aus einem organischen Stoff in einem Lösungsmittel ist.

9. Verfahren nach Anspruch 7, bei dem die organische Verbindung Erdöl, vorzugsweise Rohöl oder ein Erdölextrakt ist.

10. Verfahren nach Anspruch 7 oder 8, bei dem die organische Verbindung oder der organische Stoff einen Torfextrakt umfasst.

11. Verfahren nach Anspruch 10, bei dem der Torfextrakt ein Teer aus Torfwachs ist.

12. Verfahren nach Anspruch 10 oder 11, bei dem der Torfextrakt eine Lösung in einem Lösungsmittel aus Xylen, Erdöl-Xylen oder Toluol ist.

13. Verfahren nach einem der Ansprüche 10 bis 12, bei dem der Torfextrakt eine Lösung von Teer aus Torfwachs in Erdöl-Xylen ist.

14. Verfahren nach Anspruch 13, bei dem eine Konzentration von Teer aus Torfwachs in Erdöl-Xylen variabel ist, vorzugsweise zwischen 3% w/w und 12 % w/w, insbesondere zwischen 9,5 % w/w und 10,5 % w/w.

15. Verfahren nach einem der Ansprüche 10 bis 12, bei dem der Torfextrakt eine Lösung in Toluol einer Konzentration ist, die variabel und vorzugsweise mindestens 10% w/w ist.

16. Verfahren nach einem der Ansprüche 7 bis 15, bei dem die Zersetzung oder Verdampfung von Kohlenstoff oder der Kohlenstoff enthaltenden Verbindung in einer aktiven Zone des Ofens durchgeführt wird, die aus einem Metallrohr eines vorbestimmten Durchmessers besteht, das koaxial in einem Quarzrohr angeordnet ist, dessen Durchmesser größer als der des Metallrohrs ist.

17. Verfahren nach Anspruch 16, bei dem das Metallrohr einen Durchmesser von ungefähr 2 mm hat.

18. Verfahren nach Anspruch 16 oder 17, bei dem die aktive Zone des Ofens senkrecht positioniert oder geneigt ist.

19. Verfahren nach einem der Ansprüche 16 bis 18, bei dem eine Temperatur in dem Ofen auf zwischen 800°C und 1200°C, vorzugsweise zwischen 1000°C und 1200°C, insbesondere zwischen 1150°C und 1170°C gehalten wird.

20. Herstellungsverfahren nach Anspruch 7, zur Herstellung eines Hochspannungskabels für einen Verbrennungsmotor, insbesondere zur Herstellung eines Kabels für ein Zündsystem des Verbrennungsmotors, wobei das Kabel umfasst:
- ein elektrisch leitfähiges Kernelement in der Form eines Seils (12),
- wobei das Seil aus einer vorbestimmten Anzahl von Fäden (10) geflochten ist,
- wobei jeder Faden aus einer vorbestimmten Anzahl von Fasern (11) gedrillt ist,
- wobei jede der Fasern aus einem Kohlenstoff-Quarz-Verbundmaterial ist, so dass ein Quarzsubstrat durch eine Schicht aus Kohlenstoff oder aus einer Kohlenstoff enthaltenden Verbindung bedeckt ist,
- wobei das Verfahren die folgenden Schritte aufweist:
- Herstellen eines Quarzseils durch Verdrillen der vorbestimmten Anzahl unbeschichteter Quarzfasern zu Fäden und Flechten der vorbestimmten Anzahl von Fäden zu dem Seil,
- Vorsehen eines Bads aus einer organischen Verbindung, wie zum Beispiel Erdöl, oder wie zum Beispiel einem Teer aus Torfwachs in einem Lösungsmittelöl aus Erdöl-Xylen oder in einem Lösungsmittel aus Toluol,
- Imprägnieren des Quarzseils in dem Bad aus der organischen Verbindung,
- Laufen-Lassen des imprägnierten Seils durch einen Ofen mit einer aktiven Zone, die aus einem im Wesentlichen senkrechten Metallrohr besteht, dessen Durchmesser ungefähr 2 mm beträgt und das koaxial in einem senkrechten oder geneigten Quarzrohr angeordnet ist, dessen Durchmesser größer als der Durchmesser des Metallrohrs ist,
- wodurch der Kohlenstoff oder die Kohlenstoff enthaltende Verbindung aus der organischen Verbindung bei Temperaturen von ungefähr 1100°C bis 1200°C im Ofen zersetzt wird und
- der Kohlenstoff oder die Kohlenstoff enthaltende Verbindung auf dem Quarzsubstrat derart abgelagert wird, dass jede Faser mit einer Schicht aus dem Kohlenstoff oder der Kohlenstoff enthaltenden Verbindung bedeckt wird.

21. Verfahren nach Anspruch 7 zum Herstellen eines Kemelements eines Hochspannungskabels, insbesondere eines Hochspannungskabels für Automobil-Zündsysteme, mit den folgenden Schritten:
- Imprägnieren eines geflochtenen Quarzseils, dessen Durchmesser ungefähr 1,25 mm beträgt, mit einer organischen Verbindung, die vorzugsweise Erdöl oder eine Lösung eines Teers aus Torfwachs in Erdöl-Xylen oder in Toluol ist, und
- danach Unterziehen des imprägnierten geflochtenen Quarzseils einer Wärmebehandlung in einem Ofen bei Temperaturen zwischen 1150°C und 1170°C im Ofen,
wobei die Wärmebehandlung in einer aktiven Zone des Ofens durchgeführt wird, wobei thermodynamische und hydrodynamische Bedingungen geschaffen werden, die zum Zersetzen des Kohlenstoffs oder der Kohlenstoff enthaltenden Verbindung aus der organischen Verbindung und zum Ablagern des zersetzten Kohlenstoffs oder der Kohlenstoff enthaltenden Verbindung auf jede Faser des geflochtenen Quarzseils nötig sind, indem die aktive Zone als ein Metallrohr ausgelegt wird, dessen Durchmesser um 0,75 mm größer als der Durchmesser des geflochtenen Quarz-Seils ist.

## Revendications

1. Matériau composite électroconducteur (1) comprenant un substrat résistif à haute température (10) recouvert d'une couche de carbone ou d'une couche de composé contenant du carbone en tant qu'élément principal, dans lequel le matériau composite comprend une tresse multi-filament (12) et dans lequel ladite couche de carbone ou de composé contenant du carbone forme une enveloppe tubulaire autour de chaque filament de la tresse, **caractérisé en ce que** ledit substrat résistif à haute température est constitué de quartz, de basalte ou d'amiante.

2. Matériau composite électroconducteur selon la revendication 1 dans lequel ladite tresse présente un diamètre entre 0,1 et 10 mm, de préférence entre 0,7 et 3 mm, plus particulièrement entre 1,2 et 1,5 mm.

3. Matériau composite électroconducteur selon l'une des revendications 1 ou 2 dans lequel ladite tresse est constituée de 5 à 25 fils, de préférence de 12 à 16 fils, chaque fil ayant une densité de textile de 100 à 150 tex, de préférence de 130 à 135 tex.

4. Câble à haute tension (11-15) constitué du matériau composite électroconducteur selon l'une des revendications 1 à 3 en tant qu'élément de base électroconducteur.

5. Câble selon la revendication 4 dans lequel ledit câble est capable d'éliminer sensiblement des interférences électromagnétiques et/ou de fréquences radio.

6. Câble selon la revendication 5 dans lequel ledit câble est un câble à haute tension dans un système d'allumage d'un moteur à combustion interne.

7. Procédé de préparation d'un matériau composite électroconducteur, comprenant les étapes suivantes :
application d'un composé organique sur la surface d'un substrat résistif à haute température, le substrat étant un substrat tressé multi-filament,
faire passer le substrat ainsi chargé dans un four,
ce qui provoque la décomposition du carbone et éventuellement du matériau supplémentaire à partir dudit composé organique à des températures d'environ 800°C à 1200°C afin d'obtenir une couche de carbone ou une couche d'un composé contenant du carbone en tant qu'élément principal sur ledit substrat, chaque filament du substrat tressé étant revêtu de carbone tubulaire ou de ladite couche de composé contenant du carbone.

8. Procédé selon la revendication 7 dans lequel le composé organique est une solution de matière organique dans un solvant.

9. Procédé selon la revendication 7 dans lequel le composé organique est de l'huile, de préférence une huile brute ou un extrait oléagineux.

10. Procédé selon la revendication 7 ou 8 dans lequel le composé organique ou la matière organique contient un extrait de tourbe.

11. Procédé selon la revendication 10 dans lequel ledit extrait de tourbe est un goudron de cire de tourbe.

12. Procédé selon la revendication 10 ou 11 dans lequel ledit extrait de tourbe est une solution dans un solvant au xylène, au xylène oléagineux ou au toluène.

13. Procédé selon l'une des revendications 10 à 12 dans lequel ledit extrait de tourbe est une solution de goudron de cire de tourbe dans du xylène oléagineux.

14. Procédé selon la revendication 13, dans lequel la concentration de goudron de cire de tourbe dans du xylène oléagineux est variable, de préférence entre 3% et 12% en poids, plus particulièrement entre 9,5% et 10,5% en poids.

15. Procédé selon l'une des revendications 10 à 12, dans lequel ledit extrait de tourbe est une solution dans du toluène dont la concentration est variable et n'est pas de préférence inférieure à 10% en poids.

16. Procédé selon l'une des revendications 7 à 15, dans lequel ladite décomposition ou évaporation du carbone ou du composé contenant du carbone est effectuée au niveau d'une zone active dudit four, constituée d'un tube métallique d'un diamètre prédéterminé disposé de manière coaxiale par rapport à un tube de quartz qui présente un diamètre supérieur à celui du tube métallique.

17. Procédé selon la revendication 16, dans lequel ledit tube métallique présente un diamètre d'environ 2 mm.

18. Procédé selon les revendications 16 ou 17, dans lequel ladite zone active dudit four est verticale ou inclinée.

19. Procédé selon l'une des revendications 16 à 18, dans lequel la température à l'intérieur dudit four est maintenue entre 800°C et 1200°C, de préférence entre 1000°C et 1200°C, plus particulièrement entre 1150°C et 1170°C.

20. Procédé de fabrication, selon la revendication 7, d'un câble à haute tension pour un moteur à combustion interne, plus particulièrement pour fabriquer un câble de système d'allumage dudit moteur à combustion interne, le cordon comprenant :
- un élément de base électroconducteur ayant la forme d'un cordon (12),
- dans lequel ledit cordon est tressé à partir d'un nombre prédéterminé de fils (10),
- dans lequel chaque fil est torsadé à partir d'un nombre prédéterminé de filaments (11),
- dans lequel chacun desdits filaments est un composite carbone-quartz, de façon à ce qu'un substrat de quartz soit recouvert d'une couche de carbone ou d'un composé contenant du carbone,
- dans lequel ledit procédé comprend les étapes suivantes :
- fabrication d'un cordon de quartz en torsadant ledit nombre prédéterminé de filaments de quartz non recouverts afin d'obtenir des fils et en tressant ledit nombre prédéterminé de fils afin d'obtenir un cordon,
- réalisation d'un bain d'un composé organique semblable à de l'huile ou semblable à un goudron de cire de tourbe dans un solvant de xylène oléagineux ou dans un solvant de toluène,
- imprégnation dudit cordon de quartz dans ledit bain dudit composé organique,
- passage dudit cordon imprégné dans un four comprenant une zone active constituée d'un tube métallique sensiblement vertical ayant un diamètre d'environ 2 mm et disposé de manière coaxiale dans un tube de quartz vertical ou incliné ayant un diamètre supérieur à celui dudit tube métallique,
- décomposition du carbone ou dudit composé contenant du carbone à partir dudit composé organique à des températures d'environ 1100°C à 1200°C dans ledit four, et
- dépôt dudit carbone ou dudit composé contenant du carbone sur ledit substrat de quartz de telle sorte que chaque filament soit recouvert de ladite couche de carbone ou dudit composé contenant du carbone.

21. Procédé selon la revendication 7, pour fabriquer un élément de base d'un câble à haute tension, plus particulièrement d'un câble à haute tension pour des systèmes d'allumage automobiles, comprenant les étapes suivantes :
- imprégnation d'un cordon de quartz tressé, dont le diamètre est d'environ 1,25 mm, avec un composé organique qui est de préférence une huile ou une solution d'un goudron de cire de tourbe dans du xylène oléagineux ou dans du toluène, et
- traitement thermique du cordon de quartz tressé imprégné dans un four à des températures entre 1150°C et 1170°C,
dans lequel ledit traitement thermique est effectué au niveau d'une zone active dudit four, dans lequel les conditions thermodynamiques et hydrodynamiques sont nécessaires pour décomposer le carbone ou ledit composé contenant du carbone à partir dudit composé organique et pour déposer ledit carbone ou composé contenant du carbone sur chaque filament dudit cordon de quartz tressé en réalisant ladite zone active à l'aide d'un tube métallique ayant un diamètre supérieur de 0,75 mm à celui dudit cordon de quartz tressé.
